# EUROPEAN PATENT APPLICATION

(11) **EP 3 839 586 A1**
(43) Date of publication of application: **23.06.2021**
(21) Application number: 19217381.3
(22) Date of filing: 18.12.2019
(51) Int. Cl.: G02B 6/02, G02B 6/255, G02B 6/38

(54) **HOLLOW-CORE PHOTONIC CRYSTAL FIBER BASED OPTICAL COMPONENT FOR BROADBAND RADIATION GENERATION**

(71) Applicant: ASML Netherlands B.V., 5500 AH Veldhoven (NL)
(72) Inventor: UEBEL, Patrick Sebastian, 5500 AH Veldhoven (NL); GÖTZ, Peter Maximilian, 5500 AH Veldhoven (NL); BAUERSCHMIDT, Sebastian Thomas, 5500 AH Veldhoven (NL)
(74) Representative: ASML Netherlands B.V.

(57) **Abstract**

Disclosed are optical components and methods of manufacture thereof. A first optical component comprises a hollow-core photonic crystal fiber; first and second transparent end caps sealing respective ends of the hollow-core photonic crystal fiber, end sections between each end of the hollow-core photonic crystal fiber and its respective end cap, the end sections comprising a larger inner diameter than an inner diameter of the hollow-core photonic crystal fiber over at least a portion of said end sections; and a gas medium sealed within a space collectively defined by said hollow-core photonic crystal fiber, end sections and end caps. A second optical component comprises a hollow-core photonic crystal fiber and a sleeve arrangement.

## Description

### FIELD

The present invention relates to a hollow-core photonic crystal fiber based broadband radiation generator, and in particular such a broadband radiation generator in relation to metrology applications in the manufacture of integrated circuits.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

### SUMMARY

In a first aspect of the invention there is provided an optical component comprising: a hollow-core photonic crystal fiber; first and second transparent end caps sealing respective ends of the hollow-core photonic crystal fiber, end sections between each end of the hollow-core photonic crystal fiber and its respective end cap, the end sections comprising a larger inner diameter than an inner diameter of the hollow-core photonic crystal fiber over at least a portion of said end sections; and a gas medium sealed within a space collectively defined by said hollow-core photonic crystal fiber, end sections and end caps.

In a second aspect of the invention there is provided an optical component comprising a hollow-core photonic crystal fiber and a sleeve arrangement comprising at least one sleeve covering at least respective end portions of each end of said hollow-core photonic crystal fiber; wherein: internal capillaries of the hollow-core photonic crystal fiber are collapsed to define a tapered core region at each end of the of the hollow-core photonic crystal fiber, the tapered core region defining a comprising a region where a hollow core of the hollow-core photonic crystal fiber has an increasing diameter towards each end of the hollow-core photonic crystal fiber; and contact regions, where said sleeve arrangement contacts said hollow-core photonic crystal fiber, are all at or beyond the tapered core region with respect to a main axis of the hollow-core photonic crystal fiber.

Other aspects of the invention comprise a broadband light source and metrology device comprising the optical component of the first and second aspects and methods of manufacture of the optical component of the first and second aspects.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 schematically depicts the transverse cross-sections of the a number of HC-PCF designs for supercontinuum generation;
- Figures 8 schematically depicts a gas filled HC-PCF based broadband light source device in a known configuration;
- Figures 9 schematically depicts a gas filled HC-PCF bulb according to (a) a first embodiment, and (b) a second embodiment;
- Figure 10 schematically depicts a mounting arrangement usable for mounting optical devices as disclosed herein; and
- Figure 11 (a)-(c) schematically depict examples of optical components of a second embodiment in three different configurations.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

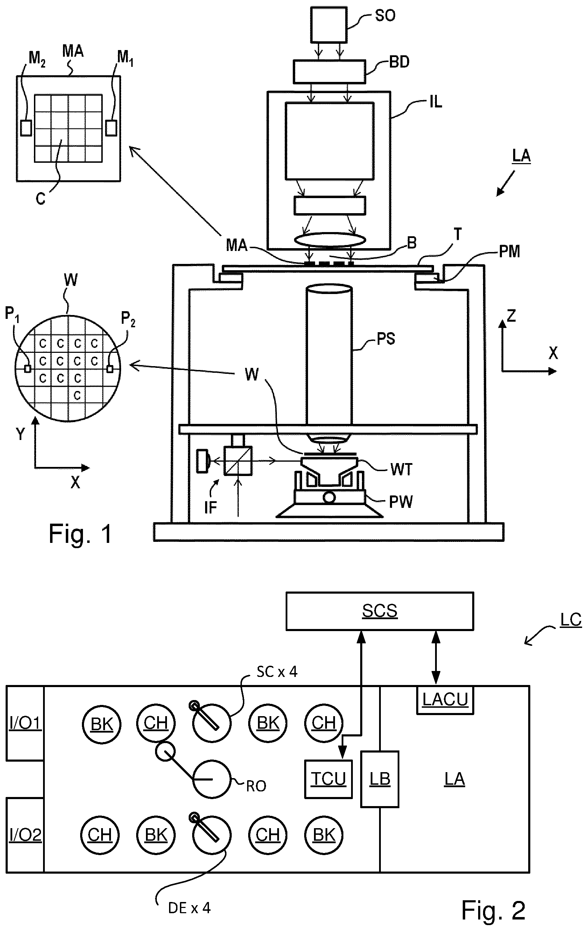

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

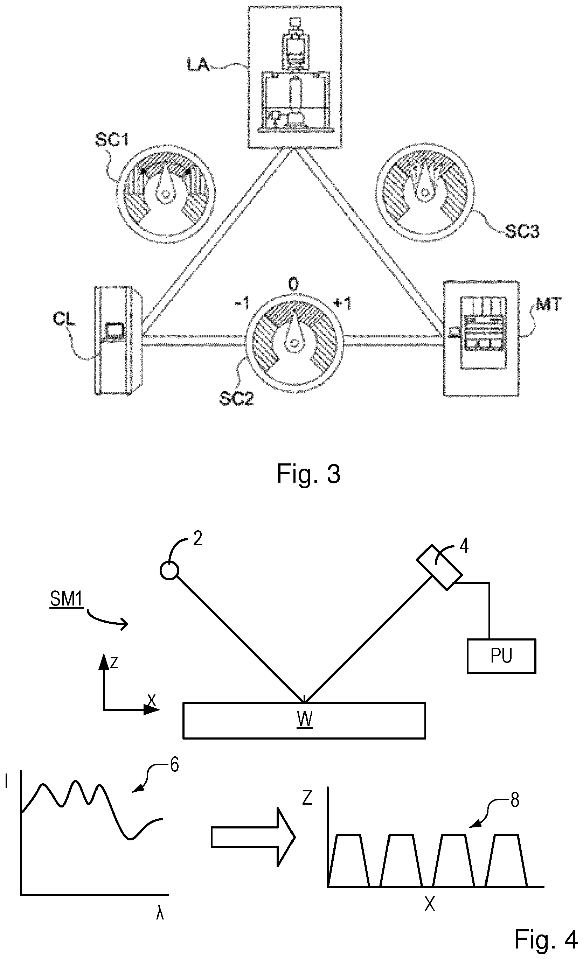

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

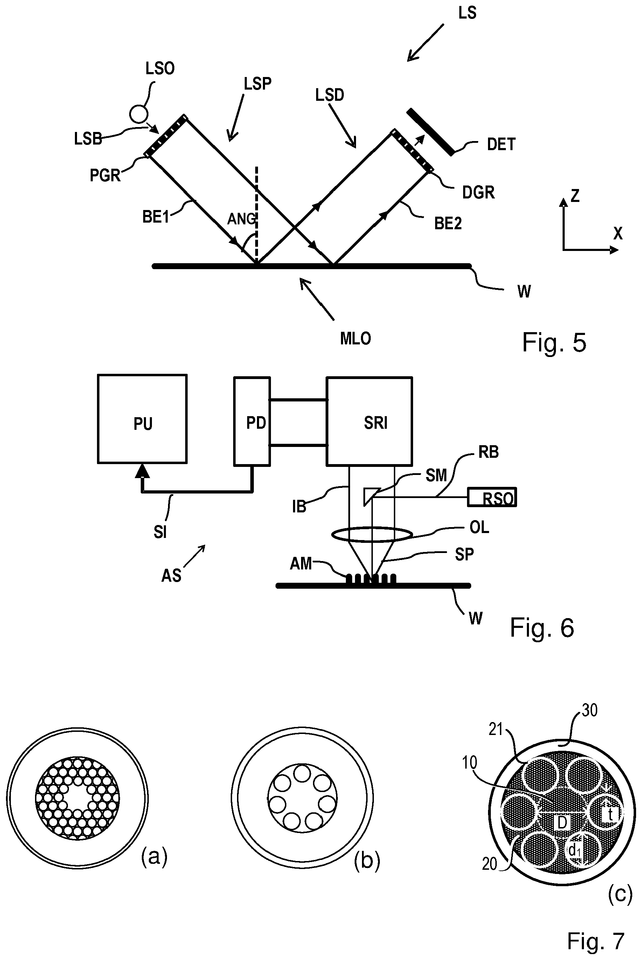

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

For optical semiconductor metrology, inspection applications, such as in any of the aforementioned metrology tools, a bright light source which outputs coherent radiation, simultaneously covering a broad wavelength range (e.g., from UV to IR), is often preferred. Such a broadband light source can help improve the flexibility and robustness of applications by allowing wafers with different material characteristics to be optically examined in the same setup/system without a need for any hardware change (e.g., changing a light source so as to have a specific wavelength). Allowing the wavelength to be optimized for a specific application also means that the accuracy of measurements can be further increased.

Gas lasers, which are based on the gas-discharge effect to simultaneously emit multiple wavelengths, can be used in these applications. However, intrinsic issues such as high intensity instability and low spatial incoherence associated with gas lasers can make them unsuitable. Alternatively, outputs from multiple lasers (e.g., solid-state lasers) with different wavelengths can be spatially combined into the optical path of a metrology or inspection system so as to provide a multiple wavelength source. The complexity and high implementation costs, which increases with the number of wavelengths desired, prevents such a solution from being widely used. In contrast, a fiber-based broadband or white light laser, also called a supercontinuum laser, is able to emit radiation with high spatial coherence and broad spectral coverage, e.g., from UV to IR, and therefore is a very attractive and practical option.

A hollow-core photonic crystal fiber (HC-PCF) is a special type of optical fiber that comprises a central hollow core region and an inner cladding structure surrounding the hollow core, both of which extend axially along the entire fiber. The light guidance mechanism is enabled by the inner cladding waveguide structure, which may comprise, for example, thin-walled glass elements. The radiation is thus confined predominantly inside a hollow core and propagates along the fiber in the form of transverse core modes.

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs).

HC-PCFs comprise hollow channels which are filled with a fluid, such that they possess resultant desired characteristics for various light guiding applications; for example, high-power beam delivery using HC-PBFs and gas-based white light generation (or supercontinuum generation) using HC-ARFs. Detail on the design and manufacture of HC-PCFs can be found in US patent US2004175085 (for HC-PBFs) and International PCT patent application WO2017032454 (for HC-ARFs), which are incorporated herein by reference. HC-PBFs are configured to offer low loss but narrow bandwidth light guidance via a photonic bandgap effect established by the cladding structure surrounding the central hollow core. Whereas, HC-ARFs are engineered to significantly broaden the transmission bandwidth via anti-resonant reflection of light from the cladding.

Figure 7 depicts in cross-section, a number of known types of HC-PCFs, and are examples of HC-PCFs for which the concepts disclosed herein can be used in combination with and/or applied to. Figure 7(a) shows a Kagome fiber, comprising a Kagome lattice structure. Figure 7(b) shows a single-ring or revolver fibers, where the hollow core region is formed and surrounded by a layer of non-touching rings.

Figures 7(c) shows transverse cross-sections of another practical example of a HC-PCFs which is disclosed in the aforementioned WO2017032454. The circles represent the solid material of the AREs or outer cladding region, like quartz glass or silica, while the shaded portions are free of solid materials (evacuated or filled with gas or liquid). The HC-PCF comprises a hollow core region 10 (represented in Figure 7(c) by a dotted circle), an inner cladding region 20 with multiple anti-resonant elements (AREs) 21 and an outer cladding region 30. The hollow core region 10 is the empty space, between the AREs 21, extending along the longitudinal length of the HC-PCF and having a smallest transverse core dimension D. The AREs 21 of the inner cladding region 20 may comprise capillaries having a wall thickness t and a smallest transverse ARE dimension d. The AREs 21 may be fixed to the inner surface of the outer cladding region 30. The outer cladding region 30 may comprise a larger capillary being made of e.g. glass and providing a closed cladding of the HC-PCF. The HC-PCF of Figure 7(c) illustrates an embodiment wherein the AREs 21 comprise a single-ring of six thin-wall capillaries with a circular transverse cross-section arranged within the larger capillary of the outer cladding region 30 in six-fold symmetric pattern so as to create a central hollow core of diameter D (the shortest distance between diametrically opposite AREs 21).

The examples of inventive HC-PCFs as shown in Figure 7(c) can be modified, in particular with regard to the number of the AREs 21. The AREs may number 4 or 5 or 7 or more, for example. The ARE arrangement may be varied in a number of other ways. Each ARE 21 may have e.g., an elliptic or polygonal cross-section; the inner shape of the outer cladding 30 may have e. g. a polygonal cross-section; and the solid materials of the AREs 21, may comprise e.g., plastic material, like PMA, glass, like silica, or soft-glass.

For gas-based white light generation, a HC-PCF may be comprised within a gas cell, which is designed to operate, for example, at a pressure up to many 10s of bars (e.g., between up to 100 bar). A gas-filled HC-PCF can act as an optical frequency converter when being pumped by an ultrashort pump laser pulse with sufficient peak power. The frequency conversion from ultrashort pump laser pulses to broadband laser pulses is enabled by a complicated interplay of the dispersion and nonlinear optical processes inside the gas-filled fiber. The converted laser pulses are predominantly confined within the hollow core in the form of transverse core modes and guided to the fiber end. Part of the radiation, for example higher order transverse core modes or specific wavelengths, may leak from the hollow core through the inner cladding waveguide structure and undergoes strong attenuation during its propagation along the fiber. The core region and the cladding region of a HC-PCF can be configured such that the higher order core modes are phase matched to the higher order cladding modes.

The spatio-temporal transmission characteristics of a laser pulse, e.g. its spectral amplitude and phase, transmitted along a HC-PCF can be varied and tuned through adjustment of pump laser parameters, filling gas parameters and fiber parameters. Said transmission characteristics may include one or more of: output power, output mode profile, output temporal profile, width of the output temporal profile (or output pulse width), output spectral profile, and bandwidth of the output spectral profile (or output spectral bandwidth). Said pump laser parameters may include one or more of: pump wavelength, pump pulse energy, pump pulse width, pump pulse repetition rate or pump pulse shape. Said fiber parameters may include one or more of: fiber length, size and shape of the hollow core, size and shape of the cladding structure (or capillary number), thickness of the walls surrounding the hollow core. Said filling gas parameters may include one or more of: gas type, gas pressure and gas temperature. The parameters of fiber and/or gas by also undergo changes along the fiber, e.g. the fiber could be tapered or there could be a gas gradient.

The filling gas can be a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the gas cell pressure, the generated broadband pulse dynamics and the associated spectral broadening characteristics can be adjusted so as to optimize the frequency conversion. The generated broadband laser output can cover wavelengths from UV (e.g., <200 nm) to mid-IR (e.g., >2000 nm).

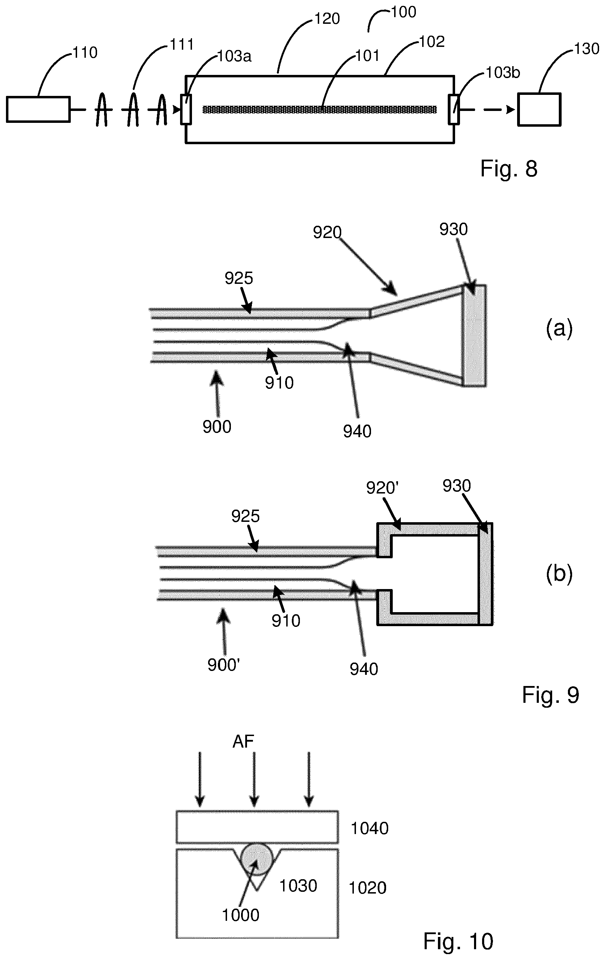

As illustrated in Figure 8, a broadband light source device 100 comprises a pump laser 110 outputting a train of pump pulses 111, an optical component 120 spectrally broadening the input pump pulse and an optical diagnostic device 130 measuring the output broadband spectrum. The optical component 120 comprises a HC-PCF (e.g., a HC-ARF) 101 having a specific fiber length and a gas cell 102 filled with a working gas or a gas mixture at a specific pressure or with a pressure distribution. The gas cell 102 further comprises an input optical window 103a and an output optical window 103b, located at respective ends of the gas cell 102. The input optical window 103a is operable to admit ultrashort pump laser pulses into the gas cell 102 via the window. After being coupled into the gas-filled HC-PCF 101, pump laser pulses 111 propagate along the fiber where they experience significant spectral broadening. Resultant broadband laser pulses are subsequently discharged from the gas cell 102 via the output optical window 103b and measured by the optical diagnostic device 130 (e.g. a spectrometer).

To fill the HC-PCF 101 with a working gas, the gas cell 102 may be in communication with a pressurized gas supply or reservoir (not shown). The inner surfaces of the walls and windows 103a, 103b of the gas cell 102 enclose a cavity. The axis of the gas cell is parallel to the axis of the HC-PCF 101.

Typically, a HC-PCF, when used in metrology applications as described herein, is supported at least at both of its ends using mounts which position the fiber relative to a fixed point within the optical system. Prior art mounting methods include the use of adhesives, tape and clamping forces applied via slotted ferrules, V-grooves, using spring-loaded holders or magnets. The inventors recently disclosed in Netherlands patent application NL2023515A, incorporated herein by reference, that the use of these methods are not suitable for gas-based supercontinuum (or white light) sources. The reasons for this include the outgassing of adhesives, resulting in contamination and reduced lifetimes, and the stress induced on the HC-PCF, which deteriorates the optical performance. In NL2023515A, it is shown that these shortcomings can be mitigated by using a mount designed to have a symmetric stress distribution with respect to the inner HC-PCF structure. Improved methods and arrangements for mounting HC-PCF within a supercontinuum radiation source will now be described.

### HC-PCF bulb

In a first embodiment, it is proposed to dispense with the gas cell 102 entirely. Instead, it is proposed to use the hollow regions within the HC-PCF 101 (i.e., within the actual fiber) as the main gas reservoir. Such a concept can be thought of as being similar to that of a conventional light bulb used in lighting applications. Hence, the proposed HC-PCF arrangement of this embodiment will be referred to as a HC-PCF bulb throughout the description.

Figure 9 illustrates one end of a combined HC-PCF bulb 900, 900' according to two such embodiments. In each case, the other end may be essentially similar, or else a HC-PCF fiber 910 may have an arrangement of Figure 9(a) at one end and of Figure 9(b) at the other (or any other combination which falls within the scope of this disclosure).

In each embodiment, the end of the HC-PCF fiber 910 comprises an end section or outer end capillary 920 920' and end cap 930. The outer end capillary 920 920' comprises a larger inner diameter than an inner diameter of the HC-PCF fiber 910 over at least a portion of the outer end capillary 920 920'. In the embodiment of Figure 9(a), the outer end capillary 920 920' may be spliced to each end of HC-PCF fiber 910 and sealed by end caps (e.g., transparent windows) 930. The end caps 930 may be made of glass, for example. The end caps 930 can also comprise an input lens at one end for in-coupling the pump beam and/or an output lens at the other end for collimating the output beam (or optionally the lenses may be separate).

In Figure 9(a), the outer end capillary 920 comprise tapered outer end capillaries 920 which are each tapered outward (e.g., defining an expanding inner diameter from the inner diameter of the HC-PCF fiber outer capillary 925 along the length of the HC-PCF fiber 910 towards the end caps 930). This is because the ultrashort laser beam of the pump laser could irreversibly damage an end cap attached directly to the HC-PCF fiber 910. Additionally, the local capillary diameter should be considerably larger than the focused/diverging laser beam at the input/output end. In Figure 9(b) the end section or outer end capillary 920' comprises a largely uniform inner diameter which is larger than the inner diameter of the HC-PCF fiber outer capillary 925. It can be appreciated that these are only examples, and any configuration having end sections with a larger inner diameter for at least a portion of the end section, such that divergent broadband radiation emitted from HC-PCF fiber 910 is not blocked by a respective end section in an axial propagation direction from the end of the HC-PCF fiber 910 (or focused pump radiation is not blocked from entering the HC-PCF fiber 910), falls within the scope of this disclosure.

Splicing the outer end capillaries 920, 920' to an HC-PCF fiber 910 may be performed in a relatively straightforward manner using commercially available fiber splicing machines (e.g. using electric arcs, filaments), or alternative methods such as flames or lasers. During the splicing of the end capillary 920, 920' with the HC-PCF fiber outer capillary 925, the internal capillaries of the HC-PCF fiber 910 may be collapsed, forming a tapered core region 940 (expanding the hollow core diameter toward the fiber end). This can improve the lifetime of the supercontinuum source, as is described in European patent application EP17171468, which is incorporated herein by reference. Splicing the end cap 930 onto the end capillary 920, 920' can be accomplished similarly. Alternatively, the collapsing of the internal capillaries can be performed in in an initial step, followed by a second step of performing the splicing.

The filling of the pressurized gas into the HC-PCF should be performed before the last splice is made. Because pressures of some tens of bars are required, any heat dissipated into the glass may result in fiber inflation. Established methods for the fabrication of pressurized glass light bulbs or plasma lamps may be adapted to make a HC-PCF bulb 900 as disclosed herein. Such methods may comprise inserting the HC-PCF bulb 900 (prior to the final splice) into a container which has been evacuated (to remove any air from the HC-PCF bulb 900) and flushing the HC-PCF bulb 900 with pressurized gas. The final splice is then made in a high-pressure environment so not to locally inflate the HC-PCF fiber 910. Provided the splices form leak-tight connections, the HC-PCF bulb 900 will keep the pressurized gas confined when removed from the container. An alternative method may comprise inserting a nozzle between one of the connections (e.g., connection between end capillary 920, 920' and end cap 930), and using the nozzle to inject the pressurized gas. By heating the fiber while rapidly removing the nozzle, the last open connection may be sealed while maintaining the pressurized gas within the HC-PCF bulb 900.

While the working gas mainly consists of relatively large atoms (e.g., Krypton) which have a low diffusion in silica, hydrogen may also be initially added to help increase lifetime of the HC-PCF bulb 900. This hydrogen will tend to diffuse more rapidly out of the HC-PCF bulb 900. The HC-PCF bulb 900 may, in certain applications, be inserted in an environment which has the same or similar partial pressures of hydrogen than those initially present inside the HC-PCF bulb 900. The gas consumption of the HC-PCF bulb 900 is ultimately provided by the solubility & diffusivity of the working gas in fused silica (or more generally the HC-PCF bulb 900 material) and by the fidelity of the splicing points at which the end capillaries 920, 920' are spliced to the main HC-PCF fiber 910 (in an embodiment). Compared to an external gas cell, any O-ring connections (or multi-material sealants or adhesives) are avoided, reducing gas leakage.

While the axial dimension HC-PCF 900 is not changed with respect to a conventional gas cell arrangement of Figure 8, the lateral dimensions may be reduced to a sub-mm scale. This reduces the cross-sectional diameter compared to the current gas cell concept (5 cm diameter) by a factor of about 20-100 times. A minimized gas volume and tubular design may improve safety aspects compared to a gas cell concept.

The overall low-volume gas reservoir of the HC-PCF bulb 900 minimizes the number density of atoms/molecules of the working gas. Consequently, the number of contaminants will be considerably reduced. Compared to a typical gas cell, the contaminant number density may be reduced by a factor of 100× or greater (e.g., when assuming an internal gas cell diameter of 1 mm -which is actually smaller than is typical presently- and a hollow diameter of the HC-PCF bulb 900 disclosed here of 0.1mm). Additionally, the HC-PCF bulb 900 may be fabricated from inert materials (silica and the working gas). Consequently, any contaminants from unclean surfaces (e.g. from lubricants used during production of the metal gas cell) or organic molecules from O-rings are avoided.

To mount the HC-PCF bulb 900, it may be clamped at a point on the capillaries 920, 920'. Consequently, any mechanical stress on the actual waveguide (fiber 940) is avoided. This should enable the use of industrialized mounting concepts, in contrast to the special mounts required to mount HC-PCFs in an external gas cell.

In an external gas cell, the polymer coating of the HC-PCF fiber should be carefully removed, because outgassing otherwise contaminates the gas environment and reduces the lifetime of the supercontinuum source. In an HC-PCF bulb 900 as disclosed here, it may be preferable to keep the fiber coating intact, or even enhance the coating for additional protection (e.g., using a recoating machine). This increases stability and protects the HC-PCF bulb 900 from environmental effects (e.g., scratches, mechanical impacts).

It is expected that costs for such a HC-PCF bulb 900 will be reduced compared to an external gas cell design. There will no longer be production costs for the metal gas cells. While, of course, there will be production costs for the HC-PCF bulb 900, the material cost will be largely negligible as it comprises only glass, and the machines required do not involve cost-intensive machining tools (e.g., CNC machines).

### Sleeved HC-PCF for Improved mounting

As has already been described, NL2023515A describes a number of mounting arrangements which provide a more symmetric stress distribution than conventional mounts. NL2023515A discloses a mounted hollow-core fiber arrangement comprising a HC-PCF, and a mount arrangement, where the mount arrangement comprises a plurality of mounting contacts configured to apply a force to an outer layer of the hollow-core fiber. A portion of the hollow-core fiber is located in a receiving region of the mount arrangement. The plurality of mounting contacts are positioned around the receiving region. The mounting contacts are distributed around the receiving region, the distribution of the mounting contacts corresponding to a distribution of features of the microstructure of the hollow-core fiber. In particular, the distribution of the mounting contacts may ensure a symmetric stress distribution (e.g., maximize symmetry of the stress distribution).

Figure 10 shows an example mounting arrangement as is disclosed in NL2023515A. A HC-PCF fiber 1000 is located within a receiving region 1030 of the mounting arrangement. The mounting arrangement comprises a base 1020 and lid 1040. An (e.g., adjustable) force AF can be applied to the lid 1040 (or both lid and base) so that they are pressed towards each other. The force may be applied, for example, via a spring-loaded screw, electrical arrangement (e.g., via electrostatic attraction using oppositely charged plates on either side of the mount arrangement) or magnetic arrangement (e.g., using magnets on either side of the mount arrangement). Base 1020 may comprise a groove defining the receiving region 1030. In the example shown, the groove is a V-shaped groove. However the groove or grooves (e.g., there may be complementary grooves in base 1020 and lid 1040) may define a receiving region 1030 having a polygonal shape (e.g., pentagonal or hexagonal), a curved shape or an irregular shape.

As is described in NL2023515A (and illustrated by Figure 8 in that publication), application of too high a camping force deteriorates the optical performance of the supercontinuum source. However, even when using the mounting arrangement of Figure 10, the allowed clamping forces (i.e., before such performance deterioration) are likely to be insufficient to robustly mount the fiber, in particular against shocks and vibrations imposed in an industrialized environment. To enable higher clamping forces, either the concept of fiber mounting concept needs to ensure a more symmetric stress distribution or the fiber needs to be more stress-resistant. The former is already addressed in NL2023515A, and it is unlikely that significant further improvement in the stress distribution symmetry will be achievable in practice. Making the fiber more stress-resistant requires a different fiber structure (e.g., larger fiber outer diameter or in-fiber stress absorbers as disclosed in Netherlands patent application NL2022892A, incorporated herein by reference). However, these concepts need experimental validation and may prove challenging to implement.

Disclosed herein is a hybrid concept, where the HC-PCF fiber is inserted into a capillary (e.g., a sleeve). The sleeve has a bore diameter that is (slightly) larger than the outer diameter of the HC-PCF fiber. The sleeve can then be clamped robustly by an appropriate mount, e.g., any of the mounts disclosed in NL2023515A and illustrated in Figure 10. An advantage of such an arrangement is that the clamping force can be relatively strong (e.g., sufficient for industrialization and stronger than possible when directly applied to the fiber), while the force is not applied directly onto the HC-PCF and, consequently, does not impair optical performance.

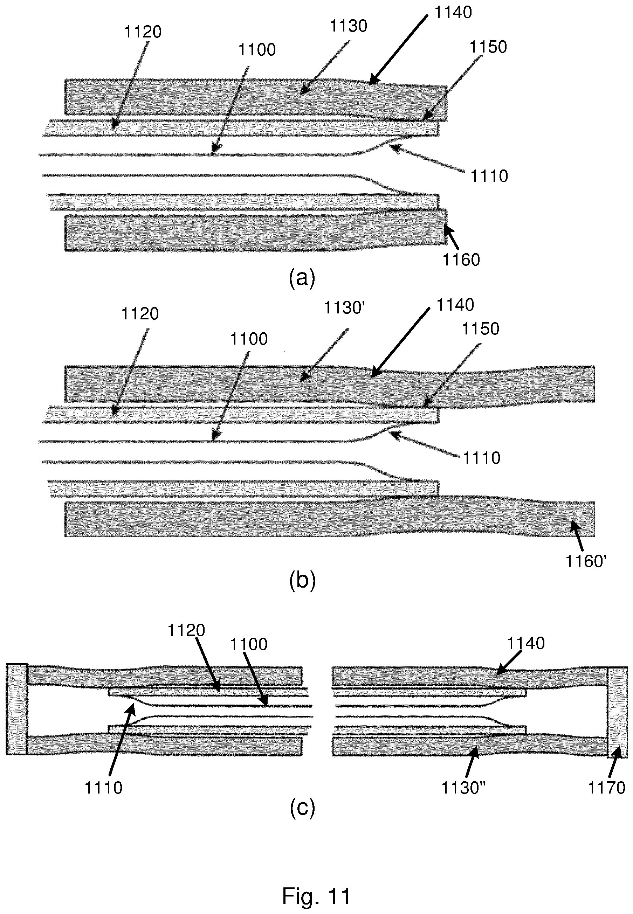

Figure 11 illustrates a number of embodiments according to this concept. In each of the embodiments shown, the HC-PCF fiber 1100 is inserted into a sleeve 1130 at each end. Each of these sleeves may have a slight tapered profile 1140 at one end. Note that this tapered profile 1140 is optional, and the HC-PCF 1100 may alternatively be incorporated within an axially homogeneous sleeve. In an embodiment, the end of the HC-PCF fiber 1100 may be inserted into the tapered sleeve 1130 until flush with the tapered profile 1140 (at contact point 1150). Such an embodiment has the advantage that the spacing between HC-PCF fiber 1100 and sleeve 1130 acts as an additional spring when the sleeve is clamped.

In Figure 11 (a) both the HC-PCF fiber 1100 and sleeve 1130, terminate at or close to the same position 1160 such that there is little or no sleeve beyond the HC-PCF fiber 1100 at each end (Figures 11(a) and (b) show only one end; both ends will be similar). In Figure 11(b) an embodiment is shown where the sleeve 1130' protrudes 1160' from the end facet of the HC-PCF fiber 1100. This improves clamping and has an additional advantage of lowering the gas turbulence and contamination build-up, potentially improving system lifetime.

Figure 11(c) illustrates another embodiment where, instead of there being a sleeve at each end, a single sleeve 1130" is provided which extends along the entire fiber 1100. In the embodiment shown, the fiber may protrude at both ends (in a similar manner to that shown in Figure 11(b)), with the ends of the sleeve being sealed by an end cap 1170 comprising a respective transparent window (e.g., an input window for receiving pump laser radiation and an output window for outputting the supercontinuum radiation). In this manner, the sleeve can function as, and effectively replace, the gas cell (e.g., gas cell 102 of Figure 8). This has the advantage of a low-volume gas cell compared to a conventional gas cell arrangement. The end caps 1170 can comprise an input lens at one end for in-coupling the pump beam and/or an output lens at the other end for collimating the output beam.

To ensure defined clamping, a robust connection between sleeve 1130, 1130', 1130" and HC-PCF 1100 should be established; e.g., forming a chemical connection between sleeve and HC-PCF. One proposed method comprises collapsing the sleeve 1130, 1130', 1130" onto the HC-PCF 1100. This may be realized by using a sleeve material which has a lower transition temperature (*T_{g}*) than the HC-PCF 1100 material (which typically comprises silica having *T_{g}* ≈ 1200 °C). As an example, borosilicate glass may be used, which has a transition temperature of *T_{g}* ≈ 165 °C. Other examples comprise soft glasses, such as chalcogenides or tellurites. However, a lower transition temperature is not necessary and this method of collapsing the sleeve also works when the sleeve material is the same material as the fiber (e.g., silica). Collapsing may be achieved by locally heating the sleeve-HC-PCF hybrid structure (e.g., apply heating by flame, filaments, electric arcs or laser light) while adjusting heating strength and heating time until a robust mechanically connection is realized, without distorting the local HC-PCF structure.

It should be noted that the collapsing of a sleeve on the HC-PCF introduces stress. This becomes more pronounced for larger differences in the thermal expansion coefficient between the materials (The thermal expansion coefficient for the HC-PCF is about 0.57x10⁶ / °K in the 0 to 200 °C range; the thermal expansion coefficient for borosilicate is about 5 times larger). Based on what is known (e.g., as described in NL2023515A), this will likely deteriorate the optical performance of the supercontinuum source. To address this, it is proposed in an embodiment that the position of local collapsing may be decoupled from the waveguiding region of the HC-PCF. As has already been described in relation to the HC-PCF bulb embodiment, the HC-PCF may be processed to fabricate tapers 1110 at both ends (e.g., to improve the lifetime of the supercontinuum source as described in EP17171468); this may be done by collapsing the thin-walled internal capillaries, before ensleeving, therefore defining a region where the hollow core dimeter increases towards the end. The inventors have realized that in this region (which is typically some hundreds of µm long) the HC-PCF is not actually a waveguide, and therefore this region is locally more stress-resistant. Provided the collapsed sleeve is within the tapered region 1110, the induced stress should not (or only to a reduced extent) impair the optical performance, while still providing a robust mounting solution.

As such, it is proposed that the sleeved HC-PCF (of any of the embodiments described) is assembled with the collapsed sleeve region 1140 (sleeve taper region) positioned to coincide with the HC-PCF internal tapered region 1110. More particularly, it is proposed that any contact areas where said sleeve arrangement contacts said hollow-core photonic crystal fiber are at or beyond the tapered core region along the hollow-core photonic crystal fiber axis (beyond the tapered core region in this context means beyond the tapered core region in a direction toward a respective end). A contact area between sleeve 1130 and fiber 1100 may comprise an axial length which is smaller than and coincident with the tapering length, such that the contact area and a main waveguide region of the HC-PCF do not coincide along the axial length.

It should be noted that embodiments of the HC-PCF bulb and sleeved HC-PCF may be combined. For example, a HC-PCF bulb may also comprise sleeves (e.g., as illustrated in Figures 11(a) or 11(b)), which may be added before splicing of the tapered ends 920 of the HC-PCF bulb.

Further embodiments are discussed in the subsequent numbered clauses:
1. An optical component, comprising:
   a hollow-core photonic crystal fiber;
   first and second transparent end caps sealing respective ends of the hollow-core photonic crystal fiber, end sections between each end of the hollow-core photonic crystal fiber and its respective end cap, the end sections comprising a larger inner diameter than an inner diameter of the hollow-core photonic crystal fiber over at least a portion of said end sections; and
   a gas medium sealed within a space collectively defined by said hollow-core photonic crystal fiber, end sections and end caps.
2. An optical component according to clause 1, wherein one or both end sections are tapered end sections which taper outward to define an expanding inner diameter from the hollow-core photonic crystal fiber towards a respective end cap.
3. An optical component according to clause 1, wherein one or both end sections have a substantially uniform inner diameter between the hollow-core photonic crystal fiber and a respective end cap.
4. An optical component according to clause 1, 2 or 3 wherein the end sections are configured such that divergent broadband radiation emitted from said hollow-core photonic crystal fiber and/or convergent pump radiation admitted into said hollow-core photonic crystal fiber is not blocked by a respective end section in an axial propagation direction.
5. An optical component as defined in any preceding clause, wherein said first transparent end cap is configured to receive a beam of pump radiation to excite said gas medium for supercontinuum generation, and said second transparent end cap is configured to emit an output beam resultant from the supercontinuum generation.
6. An optical component as defined in clause 5, wherein said first transparent end cap comprises an input lens for in-coupling the beam of pump radiation and/or said second transparent end cap comprises an output lens for collimating the output beam.
7. An optical component as defined in any preceding clause, wherein internal capillaries of the hollow-core photonic crystal fiber are collapsed to define a tapered core region at each end of the of the hollow-core photonic crystal fiber, the tapered core region defining a comprising a region where a hollow core of the hollow-core photonic crystal fiber has an increasing diameter towards each end of the hollow-core photonic crystal fiber.
8. An optical component as defined in any preceding clause, wherein the hollow-core photonic crystal fiber comprises a fiber coating
9. An optical component as defined in clause 8, wherein the fiber coating comprises a polymer.
10. An optical component as defined in any preceding clause, wherein said end sections and/or end caps are comprised of silica or borosilicate.
11. A broadband light source device, being configured for generating a broadband output, comprising:
   an optical component as defined in any preceding clause; and
   a mounting arrangement which clamps said optical component at one or more points on said end sections.
12. A broadband light source device as defined clause 11, further comprising a pump laser for outputting a plurality of pump pulses to excite said gas medium for supercontinuum generation.
13. A broadband light source device as defined in clause 11 or 12, wherein said broadband output comprises a wavelength range of 200nm to 2000nm, or a sub-range within this range
14. A method of manufacturing an optical component of any of clauses 1 to 10, comprising:
   splicing each of said end sections, each with respective end cap attached, to respective ends of the hollow-core photonic crystal fiber; and
   filling the optical component with said gas medium.
15. A method as defined in clause 14, wherein said filling of the gas medium is performed before a final splice of said splicing step is performed.
16. A method as defined in clause 15, comprising:
   inserting, prior to said final splice, the optical component into an evacuated container;
   flushing the optical component with pressurized gas; and
   making the final splice in a high-pressure environment.
17. A method as defined in clause 16, wherein said flushing step comprises heating the hollow-core photonic crystal fiber while removing a nozzle used in said flushing step.
18. An optical component, comprising:
   a hollow-core photonic crystal fiber; and
   a sleeve arrangement comprising at least one sleeve covering at least respective end portions of each end of said hollow-core photonic crystal fiber; wherein:
      internal capillaries of the hollow-core photonic crystal fiber are collapsed to define a tapered core region at each end of the of the hollow-core photonic crystal fiber, the tapered core region defining a comprising a region where a hollow core of the hollow-core photonic crystal fiber has an increasing diameter towards each end of the hollow-core photonic crystal fiber; and
      contact regions, where said sleeve arrangement contacts said hollow-core photonic crystal fiber, are all at or beyond the tapered core region with respect to a main axis of the hollow-core photonic crystal fiber.
19. An optical component as defined in clause 18, wherein the sleeve arrangement comprises a first sleeve for covering a first end portion of said hollow-core photonic crystal fiber and a second sleeve for covering a second end portion of said hollow-core photonic crystal fiber.
20. An optical component as defined in clause 19, comprising:
   a gas cell for at least partially enclosing the hollow-core photonic crystal fiber and sleeve arrangement; and
   a gas medium contained within said gas cell.
21. An optical component as defined in clause 18, wherein the sleeve arrangement comprises a single sleeve covering the length of the hollow-core photonic crystal fiber.
22. An optical component as defined in clause 21, comprising first and second transparent end caps sealing respective ends of the sleeve, and
   a gas medium contained within said sleeve.
23. An optical component as defined in clause 22, wherein said first transparent end cap is configured to receive a beam of pump radiation to excite said gas medium for supercontinuum generation, and said second transparent end cap is configured to emit an output beam resultant from the supercontinuum generation.
24. An optical component as defined in clause 23, wherein said first transparent end cap comprises an input lens for in-coupling the beam of pump radiation and/or said second transparent end cap comprises an output lens for collimating the output beam.
25. An optical component as defined in any of clauses 18 to 24, wherein the sleeve arrangement extends beyond each end of the hollow-core photonic crystal fiber.
26. An optical component as defined in any of clauses 18 to 24, wherein the sleeve arrangement terminates at or close to each end of the hollow-core photonic crystal fiber.
27. An optical component as defined in any of clauses 18 to 26, wherein the sleeve arrangement comprises a taper towards the hollow-core photonic crystal fiber at each end of the of the hollow-core photonic crystal fiber towards said contact regions.
28. An optical component as defined in any of clauses 18 to 27, wherein each of said contact regions should comprise an axial length which is smaller than the tapering length of a respective tapered core region.
29. An optical component as defined in any of clauses 18 to 28, wherein the sleeve material comprises borosilicate glass, silica, or a chalcogenide, a tellurite or other soft glass.
30. A method of manufacturing an optical component of any of clauses 18 to 29, comprising:
   introducing said hollow-core photonic crystal fiber into said sleeve arrangement; and
   locally heating the sleeve arrangement to collapse it onto the hollow-core photonic crystal fiber.
31. A method as defined in clause 30, wherein the step of locally heating comprises adjusting heating strength and heating time during the step until a robust mechanically connection is realized, so as to minimize distortion of the hollow-core photonic crystal fiber.
32. A broadband light source device, being configured for generating a broadband output, comprising:
   an optical component as defined in any of clauses 18 to 29; and
   a mounting arrangement which clamps said optical component on said sleeve arrangement.
33. A broadband light source device as defined clause 32, further comprising a pump laser for outputting a plurality of pump pulses to excite a gas medium contained within the hollow-core photonic crystal fiber for supercontinuum generation.
34. A broadband light source device as defined in clause 32 or 33, wherein said broadband output comprises a wavelength range of 230nm to 2300nm, or a sub-range within this range.
35. A metrology device comprising a broadband light source device as defined in any of clauses 11 to 13, or 32 to 34.
36. A metrology device as defined in clause 35, wherein said metrology device is operable as scatterometer metrology apparatus
37. A metrology device as defined in clause 35, wherein said metrology device is operable as a level sensor or an alignment sensor.
38. A lithographic apparatus comprising at least one said metrology device as defined in clause 37 for performing alignment and/or levelling metrology.
39. A lithographic cell comprising the lithographic apparatus of clause 38 and a metrology device as defined in clause 36.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. An optical component, comprising:
a hollow-core photonic crystal fiber;
first and second transparent end caps sealing respective ends of the hollow-core photonic crystal fiber, end sections between each end of the hollow-core photonic crystal fiber and its respective end cap, the end sections comprising a larger inner diameter than an inner diameter of the hollow-core photonic crystal fiber over at least a portion of said end sections ; and
a gas medium sealed within a space collectively defined by said hollow-core photonic crystal fiber, end sections and end caps.

2. An optical component according to claim 1, wherein one or both end sections are tapered end sections which taper outward to define an expanding inner diameter from the hollow-core photonic crystal fiber towards a respective end cap.

3. An optical component as claimed in claim 1 or 2, wherein said first transparent end cap is configured to receive a beam of pump radiation to excite said gas medium for supercontinuum generation, and said second transparent end cap is configured to emit an output beam resultant from the supercontinuum generation.

4. An optical component as claimed in claim 3, wherein said first transparent end cap comprises an input lens for in-coupling the beam of pump radiation and/or said second transparent end cap comprises an output lens for collimating the output beam.

5. An optical component as claimed in any preceding claim, wherein internal capillaries of the hollow-core photonic crystal fiber are collapsed to define a tapered core region at each end of the of the hollow-core photonic crystal fiber, the tapered core region defining a comprising a region where a hollow core of the hollow-core photonic crystal fiber has an increasing diameter towards each end of the hollow-core photonic crystal fiber.

6. An optical component as claimed in any preceding claim, wherein the hollow-core photonic crystal fiber comprises a fiber coating

7. An optical component as claimed in any preceding claim, wherein said end sections and/or end caps are comprised of silica or borosilicate.

8. A broadband light source device, being configured for generating a broadband output, comprising:
an optical component as claimed in any preceding claim; and
a mounting arrangement which clamps said optical component at one or more points on said end sections.

9. A method of manufacturing an optical component of any of claims 1 to 7, comprising:
splicing each of said end sections, each with respective end cap attached, to respective ends of the hollow-core photonic crystal fiber; and
filling the optical component with said gas medium.

10. An optical component, comprising:
a hollow-core photonic crystal fiber; and
a sleeve arrangement comprising at least one sleeve covering at least respective end portions of each end of said hollow-core photonic crystal fiber; wherein:
internal capillaries of the hollow-core photonic crystal fiber are collapsed to define a tapered core region at each end of the of the hollow-core photonic crystal fiber, the tapered core region defining a comprising a region where a hollow core of the hollow-core photonic crystal fiber has an increasing diameter towards each end of the hollow-core photonic crystal fiber; and
contact regions, where said sleeve arrangement contacts said hollow-core photonic crystal fiber, are all at or beyond the tapered core region with respect to a main axis of the hollow-core photonic crystal fiber.

11. An optical component as claimed in claim 10, wherein the sleeve arrangement comprises a single sleeve covering the length of the hollow-core photonic crystal fiber.

12. An optical component as claimed in any of claims 10 or 11, wherein the sleeve arrangement extends beyond each end of the hollow-core photonic crystal fiber.

13. A method of manufacturing an optical component of any of claims 10 to 12, comprising:
introducing said hollow-core photonic crystal fiber into said sleeve arrangement; and
locally heating the sleeve arrangement to collapse it onto the hollow-core photonic crystal fiber.

14. A broadband light source device, being configured for generating a broadband output, comprising:
an optical component as claimed in any of claims 10 to 12; and
a mounting arrangement which clamps said optical component on said sleeve arrangement.

15. A metrology device comprising a broadband light source device as claimed in any of claims 8 or 14.
